# EUROPÄISCHE PATENTSCHRIFT

(11) **EP 2 115 884 B1**
(45) Veröffentlichungstag und Bekanntmachung des Hinweises auf die Patenterteilung: **17.04.2019**
(21) Anmeldenummer: 07856752.6
(22) Anmeldetag: 14.12.2007
(51) Int. Cl.: H04B 5/00, G06K 19/077

(54) **ENDGERÄT ZUR KONTAKTLOSEN KOMMUNIKATION MIT EINER TRANSPONDERANORDNUNG**
TERMINAL DEVICE FOR THE CONTACTLESS COMMUNICATION WITH A TRANSPONDER ARRANGEMENT
TERMINAL POUR LA COMMUNICATION SANS CONTACT AVEC UN SYSTÈME DE TRANSPONDEURS

(30) Priorität: 22.12.2006 DE 102006061314
(43) Veröffentlichungstag der Anmeldung: 11.11.2009
(73) Patentinhaber: Giesecke+Devrient Mobile Security GmbH, 81677 München (DE)
(72) Erfinder: FINKENZELLER, Klaus, 85774 Unterföhring (DE)
(86) Internationale Anmeldenummer: PCT/EP2007/011014
(87) Internationale Veröffentlichungsnummer: WO 2008/077513

(56) Entgegenhaltungen:
- EP-A- 1 265 186
- WO-A-97/46964
- JP-A- 2001 076 102

## Beschreibung

Die Erfindung betrifft ein Endgerät zur kontaktlosen Kommunikation mit einer Transponderanordnung. Weiterhin betrifft die Erfindung ein Verfahren zur kontaktlosen Kommunikation zwischen einem Endgerät und einer Transponderanordnung.

Endgeräte zur kontaktlosen Kommunikation mit Transpondern sind bereits vielfältig bekannt. Dabei wird als Transponder im Folgenden eine Einheit mit wenigstens einem integrierten Schaltkreis und einer daran angeschlossenen Antenneneinrichtung zur kontaktlosen Datenübertragung bezeichnet. Je nach Ausbildung des Transponders kann auch eine Energieübertragung über die Antenneneinrichtung vorgesehen sein. Die kontaktlose Datenübertragung kann entweder unidirektional oder bidirektional erfolgen, wobei im Falle einer unidirektionalen Datenübertragung die Daten in der Regel vom Transponder zum Endgerät übertragen werden, d. h. das Endgerät liest den Transponder aus.

Für die Energie- und Datenübertragung zwischen einem Endgerät und einem Transponder existiert eine Reihe von Normen, welche die Übertragung näher spezifizieren, um einen zuverlässigen Betrieb zu gewährleisten. Beispielsweise kann eine induktive Kopplung des Transponders mit dem Endgerät gemäß der Norm ISO/IEC 14443 erfolgen. Diese Norm sieht eine Energie- und Datenübertragung mit Hilfe eines magnetischen Wechselfelds der Frequenz 13,56 MHz vor, wobei die Reichweite typischerweise etwa 10 cm beträgt.

Die bekannten Endgeräte sind für eine Einzelhandhabung der Transponder ausgelegt, d. h. die Transponder, die beispielsweise als kontaktlose Chipkarten ausgebildet sind, werden dem Endgerät jeweils einzeln angenähert bis sie sich innerhalb der Übertragungsreichweite des Endgeräts befinden. Dann wird eine kontaktlose Kommunikation zwischen dem Endgerät und dem jeweiligen Transponder durchgeführt. Anschließend wird der jeweilige Transponder wieder entfernt. Die bekannten Endgeräte sind zwar in der Regel auch dann noch in der Lage, eine kontaktlose Kommunikation durchzuführen, wenn sich mehrere Transponder gleichzeitig innerhalb der Übertragungsreichweite befinden. Die Anzahl der Transponder innerhalb der Übertragungsreichweite darf allerdings nicht sehr groß sein oder die Transponder dürfen nicht zu nahe zueinander benachbart angeordnet sein, damit sich die gegenseitige Beeinflussung der Transponder untereinander in Grenzen hält.

Die bekannten Endgeräte sind nicht dafür vorgesehen mit einem Transponder einer Transponderanordnung zu kommunizieren, die viele Transponder in unmittelbarer räumlicher Nähe zueinander aufweist. Durch diese räumliche Nähe kommt es zu einer induktiven Kopplung der Transponder untereinander und somit zu einer Verschiebung der Resonanzfrequenz der Transponder. Da mit zunehmender Entfernung von der Resonanzfrequenz die Energie- und Datenübertragung immer ineffizienter wird, ist ohne zusätzliche Maßnahmen eine zuverlässige Kommunikation mit einem Transponder einer derartigen Transponderanordnung nicht möglich.

Es besteht zwar die Möglichkeit, die Verschiebung der Resonanzfrequenz bei der Auslegung der Transponder zu berücksichtigen, indem die einzelnen Transponder jeweils für eine Resonanzfrequenz ausgebildet werden, die größer als die Frequenz des im Betrieb verwendeten magnetischen Wechselfelds ist. Allerdings hängt das Ausmaß der Verschiebung der Resonanzfrequenz von der Anzahl der miteinander gekoppelten Transponder ab. Dies führt zu Problemen, wenn die Anzahl nicht bekannt ist oder sich ändern kann, wie beispielsweise beim Einfügen elektronischer Visa in ein Ausweisbuch, wobei jedes Visum als ein Transponder ausgebildet ist. Außerdem ergeben sich auch dann Probleme, wenn die Kopplung des für die Kommunikation vorgesehenen Transponders mit den anderen Transpondern der Transponderanordnung aufgehoben oder reduziert wird. Dies kann beispielsweise durch das Aufschlagen einer Seite des Ausweisbuchs geschehen. Mangels Kopplung würde der Transponder dann seine ursprüngliche Resonanzfrequenz aufweisen, die sehr weit von der vom Endgerät verwendeten Frequenz entfernt ist.

Die WO 1997/046964 A1 beschreibt ein Lesegerät, welches zum Lesen sowohl eines kontaktlosen als auch eines kontaktbehafteten Datenträgers eingerichtet ist. Hierzu weist das Lesegerät eine Antenne sowie Kontaktflächen auf.

Aus der EP 1 265 186 A2 ist ein Kartenleser mit einer Aufnahme für einen Datenträger bekannt, bei dem eine Antennenspule parallel zu der Aufnahme angeordnet ist und zwar derart, dass das Magnetfeld der Antennenspule den in der Aufnahme befindlichen Kartenträger durchsetzt.

Um eine optimale Signalstärke zu erzielen, sieht die JP 2001 076 102 A vor, auch kontaktlose Datenträger in einen Schlitz einer Lesevorrichtung einzuführen, so dass die dort eingerichtete Antennenspule eine maximale Kopplung mit der Antenne des Datenträgers erzielen kann.

Der Erfindung liegt die Aufgabe zugrunde, eine kontaktlose Kommunikation mit einem Transponder einer Transponderanordnung zuverlässig zu ermöglichen.

Diese Aufgabe wird durch ein Endgerät mit der Merkmalskombination des Anspruchs 1 und durch ein Verfahren gemäß Anspruch 14 gelöst.

Weitere Vorteile und Ausgestaltungen der Erfindung ergeben sich aus den Unteransprüchen.

Die Erfindung wird nachstehend anhand der in der Zeichnung dargestellten Ausführungsbeispiele erläutert.

Es zeigen:
- Fig. 1: ein Ausführungsbeispiel eines erfindungsgemäß ausgebildeten Endgeräts in einer vereinfachten Perspektivdarstellung,
- Fig. 2: das in Fig. 1 dargestellte Ausführungsbeispiel des Endgeräts in einer schematischen Schnittdarstellung,
- Fig. 3: ein Ausführungsbeispiel des Ausweisbuchs in einer schematischen Schnittdarstellung,
- Fig. 4: das in der Fig. 1 dargestellte Ausführungsbeispiel des Endgeräts mit dem Ausweisbuch in einem ersten aufgeblätterten Zustand in einer schematischen Schnittdarstellung,
- Fig. 5: das in der Fig. 1 dargestellte Ausführungsbeispiel des Endgeräts mit dem Ausweisbuch in einem zweiten aufgeblätterten Zustand in einer schematischen Schnittdarstellung und
- Fig. 6: ein weiteres Ausführungsbeispiel des Endgeräts in einer vereinfachten Perspektivdarstellung.

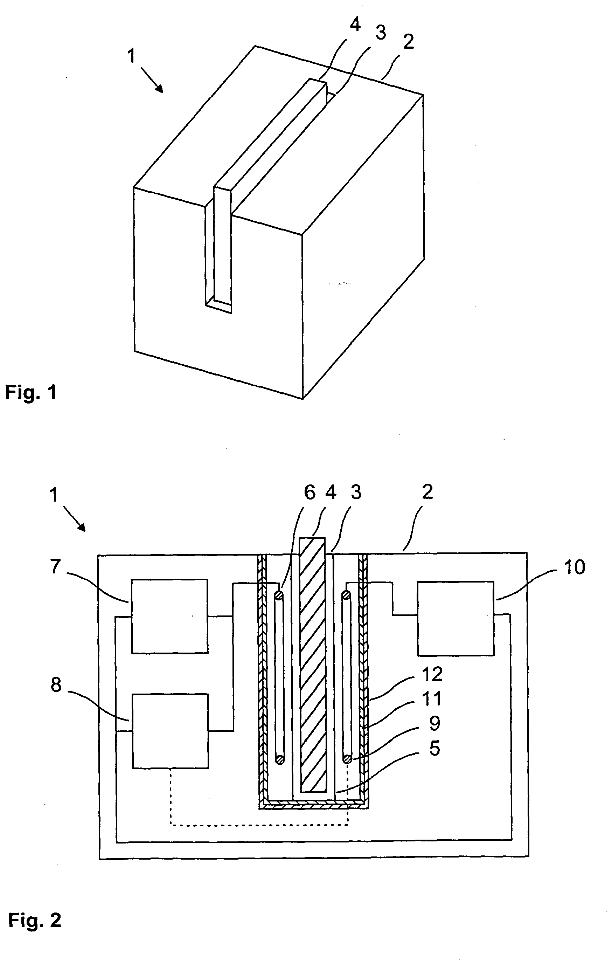

Fig. 1 zeigt ein Ausführungsbeispiel eines erfindungsgemäß ausgebildeten Endgeräts 1 in einer vereinfachten Perspektivdarstellung. Das Endgerät 1 weist ein quaderförmiges Gehäuse 2 auf, in dem ein rechteckiger Schlitz 3 zur Aufnahme eines Ausweisbuchs 4 ausgebildet ist. Der Schlitz 3 erstreckt sich als eine zusammenhängende Öffnung über zwei aneinandergrenzende Flächen des Gehäuses 2 und kann auch zur Aufnahme anderer Transponderanordnungen als des Ausweisbuchs 4 ausgebildet sein und demgemäß auch eine andere als die in Fig. 1 dargestellte Geometrie aufweisen.

Fig. 2 zeigt das in Fig. 1 dargestellte Ausführungsbeispiel des Endgeräts 1 in einer schematischen Schnittdarstellung. Innerhalb des Gehäuses 2 des Endgeräts 1 ist ein Aufnahmeraum 5 in Form eines flachen Quaders zur Aufnahme des Ausweisbuchs 4 ausgebildet. Die Abmessungen des Aufnahmeraums 5 sind so auf das Ausweisbuch 4 abgestimmt, dass der Aufnahmeraum 5 das Ausweisbuch 4 wenigstens teilweise aufnehmen kann. Außerdem sind der Schlitz 3 und der Aufnahmeraum 5 relativ zueinander so angeordnet, dass der Schlitz 3 auf den beiden Flächen des Gehäuses 2, über die sich der Schlitz 3 erstreckt, mit dem Aufnahmeraum 5 fluchtet, so dass das Ausweisbuch 4 von außen durch den Schlitz 3 hindurch in den Aufnahmeraum 5 eingeschoben werden kann. In der Darstellung der Fig. 2 ist das Ausweisbuch 4 maximal in den Aufnahmeraum 5 eingeschoben.

Unmittelbar benachbart zu einer ersten Hauptfläche des Aufnahmeraums 5 ist eine Antenne 6 angeordnet. Die Antenne 6 ist beispielsweise als eine Spule ausgebildet und mit einer Sendeeinrichtung 7 sowie mit einer Empfangseinrichtung 8 verbunden. Die Sendeeinrichtung 7 und die Empfangseinrichtung 8 sind innerhalb des Gehäuses 2 des Endgeräts 1 angeordnet.

Unmittelbar benachbart zu einer zweiten Hauptfläche des Aufnahmeraums 5, die der ersten Hauptfläche gegenüber liegt, kann ein Magnetfeldsensor 9 angeordnet sein. Der Magnetfeldsensor 9 ist beispielsweise als eine einwindige Leiterschleife ausgebildet und mit einer Messeinrichtung 10 verbunden, die wiederum mit der Sendeeinrichtung 7 und der Empfangseinrichtung 8 verbunden ist. Wie durch eine gestrichelte Linie angedeutet ist, kann der Magnetfeldsensor 9 alternativ oder zusätzlich mit der Empfangseinrichtung 8 verbunden sein. Im Falle einer alternativen Verbindung kann die Messeinrichtung 10 entfallen.

Der Aufnahmeraum 5 ist von einer Ferritschicht 11 umgeben, wobei der Schlitz 3 ausgespart ist, um die Zugänglichkeit des Aufnahmeraums 5 zu erhalten. Die Ferritschicht 11 ist vorzugsweise parallel zu den Begrenzungsflächen des Aufnahmeraums 5 ausgebildet und auf deren vom Aufnahmeraum 5 abgewanden Seiten an der Antenne 6 und am Magnetfeldsensor 9 vorbeigeführt. Die Ferritschicht 11 ist wiederum von einer Metallschicht 12 umgeben. Die Kombination aus der Ferritschicht 11 und der Metallschicht 12 kann beispielsweise durch eine Anordnung aus mehreren metallisch beschichteten Ferritplatten ausgebildet werden.

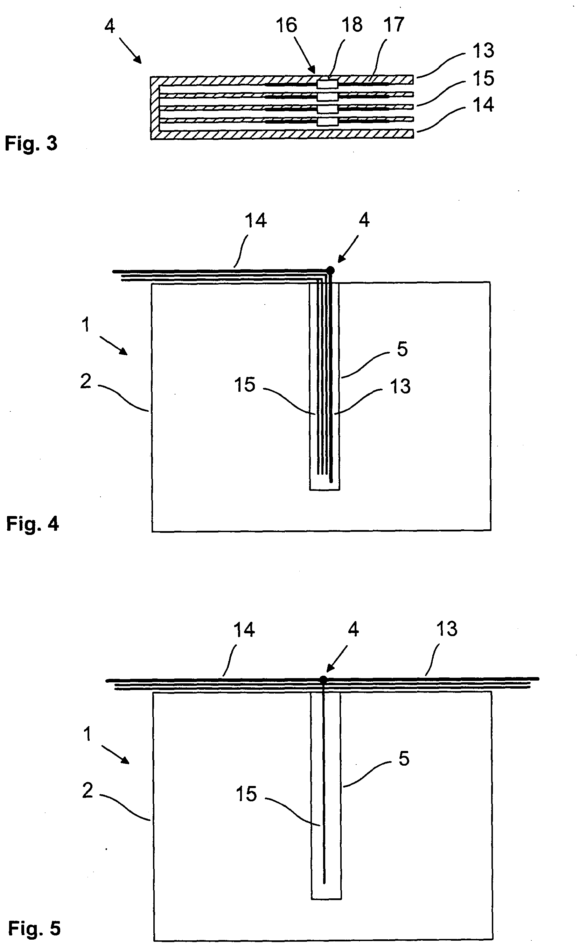

Fig. 3 zeigt ein Ausführungsbeispiel des Ausweisbuchs 4 in einer schematischen Schnittdarstellung. Das Ausweisbuch 4 weist eine vordere Umschlagseite 13, eine hintere Umschlagseite 14 und mehrere Innenseiten 15 auf. Auf oder in jeder Innenseite 15 und auch auf den Umschlagseiten 13 und 14 können ein oder mehrere Transponder 16 angeordnet sein. Beim dargestellten Ausführungsbeispiel weist die hintere Umschlagseite 14 keinen Transponder 16 auf. Die Transponder 16 weisen jeweils eine Transponderantenne 17 und einen integrierten Schaltkreis 18 auf, an den die Transponderantenne 17 angeschlossen ist. Die Transponderantennen 17 können beispielsweise als Spulen, vorzugsweise mit einigen wenigen Windungen, ausgebildet sein. Insbesondere können die Transponder 16 für eine Nahfeldkommunikation mittels magnetischer Wechselfelder ausgebildet sein, beispielsweise bei einer Trägerfrequenz von 13,56 MHz. Dabei können die Transponder 16 insbesondere gemäß der Norm ISO/IEC 14443 ausgebildet sein.

Der auf der vorderen Umschlagseite 13 angeordnete Transponder 16 repräsentiert das Ausweisbuch 4 und hat in seinen integrierten Schaltkreis 18 Informationen gespeichert, die spezifisch für das Ausweisbuch 4 sind. Die anderen Transponder 16 repräsentieren jeweils ein Visum und haben in ihren integrierten Schaltkreisen 18 Informationen gespeichert, die spezifisch für die Visa sind. Dies bedeutet, dass das Ausweisbuch 4 einen Transponder 16 für seine Ausweisbuchfunktion aufweist und zudem eine Anzahl von Transpondern 16 für in der Regel je eine Visumfunktion aufweisen kann. Die Zahl der Transponder 16 mit Visumfunktion kann zwischen Null und einer Zahl im oberen einstelligen Bereich, unter Umständen sogar einer Zahl im unteren zweistelligen Bereich variieren. Dabei besteht die Möglichkeit, dass während der Lebensdauer des Ausweisbuchs 4 weitere Transponder 16 mit Visumfunktion hinzugefügt werden oder vorhandene Transponder 16 mit Visumfunktion entfernt werden. Dies lässt sich beispielsweise dadurch realisieren, dass die Transponder 16 mit Visumfunktion als Klebeetiketten ausgeführt sind.

Das Endgerät 1 dient dazu, eine kontaktlose Kommunikation mit wenigstens einem Transponder 16 des Ausweisbuchs 4 durchzuführen. Diese Kommunikation kann eine Datenübertragung vom Endgerät 1 zum Transponder 16 und/oder vom Transponder 16 zum Endgerät 1 beinhalten.

Zur Durchführung der Kommunikation wird das Ausweisbuch 4 in den Schlitz 3 des Endgeräts 1 eingeführt und in der in den Fig. 1 und 2 dargestellten Weise im Aufnahmeraum 5 des Endgeräts 1 angeordnet. Im Endgerät 1 kann eine nicht figürlich dargestellte Detektoreinrichtung vorgesehen sein, mit deren Hilfe das Endgerät 1 feststellen kann, ob sich ein Ausweisbuch 4 im Aufnahmeraum 5 des Endgeräts 1 befindet. Nach dem Anordnen des Ausweisbuchs 4 im Aufnahmeraum 5 des Endgeräts 1 kann vorgesehen sein, dass das Ausweisbuch 4 in eine optimale Position befördert wird und/oder in seiner Lage arretiert wird. Hierfür sind mechanische Einrichtungen im Endgerät 1 erforderlich, die in den Fig. 1 und 2 nicht dargestellt sind.

Mittels der Antenne 6 erzeugt das Endgerät 1 ein hochfrequentes magnetisches Wechselfeld, beispielsweise bei einer Frequenz von 13,56 MHz, dessen Feldrichtung senkrecht zu den Hauptflächen des Aufnahmeraums 5 verläuft. Durch das Wechselfeld werden die im Ausweisbuch 4 vorhandenen Transponder 16 mit Energie versorgt, so dass diese betriebsbereit sind. Weiterhin können über das Wechselfeld Daten zwischen Endgerät 1 und einem Transponder 16 oder mehreren Transpondern 16 des Ausweisbuchs 4 übertragen werden. Mit Hilfe des Magnetfeldsensors 9 kann dabei jeweils die für die Transponder 16 des Ausweisbuchs 4 verfügbare magnetische Feldstärke ermittelt werden.

Wenn der Magnetfeldsensor 9 mit der Empfangseinrichtung 8 verbunden ist, besteht weiterhin die Möglichkeit, den Magnetfeldsensor 9 als Empfangsantenne für Datensignale zu verwenden, die von einem der Transponder 16 des Ausweisbuchs 4 an das Endgerät 1 übermittelt werden. Diese Übermittlung kann durch eine Modulation, insbesondere durch eine Lastmodulation, des Wechselfelds durch den jeweiligen Transponder 16 des Ausweisbuchs 4 erfolgen. Bei der Lastmodulation wird durch den Transponder 16 eine im Takt der zu übertragenden Daten variierende Last ausgebildet. Dadurch wird dem Wechselfeld eine schwache Modulation aufgeprägt, welche die zu übertragenden Daten repräsentiert. Diese Modulation kann vom Magnetfeldsensor 9 erfasst werden.

Alternativ zur Verwendung des Magnetfeldsensors 9 besteht auch die Möglichkeit, die vom Transponder 16 des Ausweisbuchs 4 erzeugten Datensignale mit Hilfe der Antenne 6 des Endgeräts 1 zu empfangen. Dann kann die Verbindung zwischen dem Magnetfeldsensor 9 und der Empfangseinrichtung 8 entfallen. Je nach den gewünschten Betriebsmodi kann die Verbindung der Empfangseinrichtung 8 mit dem Magnetfeldsensor 9 entweder alternativ oder zusätzlich zur Verbindung der Empfangseinrichtung 8 mit der Antenne 6 ausgebildet werden.

Insbesondere im geschlossenen Zustand des Ausweisbuchs 4 sind mehrere Transponder 16 in Form eines Stapels angeordnet und befinden sich somit in unmittelbarer räumlicher Nähe zueinander. Es kommt daher zu einer Wechselwirkung der Transponder 16 untereinander, durch die die Eigenschaften der Transponder 16, insbesondere die Kommunikationseigenschaften, beeinflusst werden können. Beispielsweise kann sich mit zunehmender Zahl von Transpondern 16, die an der Wechselwirkung beteiligt sind, deren Resonanzfrequenz zu kleineren Werten verschieben. Dadurch erhöht sich die Ansprechschwelle der Transponder 16, d. h. die für eine Kommunikation mit den Transpondern 16 benötigte Mindestfeldstärke des Wechselfelds. Außerdem kann die Antenne 6 des Endgeräts 1 durch die Transponder 16 des Ausweisbuchs 4 verstimmt und belastet werden und dadurch die von der Antenne 6 im Aufnahmeraum 5 erzeugte magnetische Feldstärke reduziert werden. Das Endgerät 1 eignet sich insbesondere auch für eine Kommunikation mit einem Ausweisbuch 4, dessen Transponder 16 infolge der Wechselwirkung eine um wenigstens 50% oder sogar eine um wenigstens 60 % reduzierte Resonanzfrequenz aufweisen.

Mit Hilfe des Magnetfeldsensors 9 kann die tatsächlich vorhandene Feldstärke des Wechselfelds im Bereich des Aufnahmeraums 5 von der Messeinrichtung 10 ermittelt werden. Auf Basis der ermittelten Feldstärke kann dann von der Messeinrichtung 10 ein Steuersignal an die Sendeeinrichtung 7 übermittelt werden, um die von der Antenne 6 abgestrahlte Leistung abhängig von der gemessenen Feldstärke des Wechselfelds zu steuern. Dadurch kann beispielsweise einem zu starken Abfallen der Feldstärke beim Einführen des Ausweisbuchs 4 in den Schlitz 3 des Endgeräts 1 entgegengewirkt werden. Insbesondere ist es möglich, die Feldstärke des Wechselfelds unter Standardbetriebsbedingungen nach dem Einlegen des Ausweisbuchs 4 in den Aufnahmeraum 5 des Endgeräts 1 zu messen und daraus optimale Betriebsparameter des Endgeräts 1 zu ermitteln, die dann während der Kommunikation mit einem der Transponder 16 des Ausweisbuchs 4 verwendet werden.

Die Lastmodulation ist bereits unter Idealbedingungen sehr schwach ausgebildet, d. h. die durch die variierende Last bewirkte Änderung der Feldstärke des Wechselfelds ist bezogen auf den absoluten Wert für die Feldstärke sehr gering. Mit einer zunehmenden Anzahl von sich gegenseitig beeinflussenden Transpondern 16 nimmt die durch die Lastmodulation hervorgerufene relative Änderung des Wechselfelds noch weiter ab. In der Norm ISO/IEC 14443 ist ein Mindestwert für die Lastmodulation vorgegeben, für den das Endgerät 1 auszulegen ist. Weiterhin ist in der Norm ISO/IEC 10373-6 ein Verfahren angegeben, mit dem die tatsächliche Stärke der Lastmodulation ermittelt werden kann. Bei einem herkömmlichen gemäß der Norm ISO/IEC 14443 ausgebildeten Endgerät 1 ist eine zuverlässige Datenübertragung vom Ausweisbuch 4 zum Endgerät 1 nur dann gewährleistet, wenn die tatsächliche Stärke der Lastmodulation den normgemäß vorgegebenen Mindestwert überschreitet.

Gemäß der Erfindung ist die Empfangseinrichtung 8 des Endgeräts 1 hochempfindlichen ausgebildet, so dass sie auch noch weit unterhalb des normgemäßen Mindestwerts für die Stärke der Lastmodulation zuverlässig arbeitet. Insbesondere weist die Empfangseinrichtung 8 eine gegenüber der Norm wenigstens verdoppelte, vorzugsweise sogar vervierfachte, Empfindlichkeit auf, so dass ein zuverlässiger Empfang durch die Empfangseinrichtung 8 auch noch bei der Hälfte bzw. einem Viertel des normgemäßen Mindestwerts für die Lastmodulation und darunter möglich ist. Dabei besteht die Möglichkeit, die Empfindlichkeit der Empfangseinrichtung 8 variabel zu gestalten und abhängig von dem nach dem Einlegen des Ausweisbuchs 4 in den Aufnahmeraum 5 ermittelten Messwert für die Feldstärke des Wechselfelds einzustellen.

Durch die Steigerung der Empfindlichkeit der Empfangseinrichtung 8 nimmt die Anfälligkeit des Endgeräts 1 gegen Störfelder zu. Durch die Ferritschicht 11 und die Metallschicht 12 kann ein Vordringen von Störfeldern in den Bereich des Aufnahmeraums 5 aber weitgehend verhindert werden. Gleichzeitig wird dadurch auch ein unbefugtes Abhören der im Bereich des Aufnahmeraums 5 übertragenen Signale verhindert.

Gemäß der Darstellung der Fig. 2 ist das Ausweisbuch 4 im geschlossenen Zustand im Aufnahmeraum 5 des Endgeräts 1 angeordnet. Dies bedeutet, dass die vordere Umschlagseite13, die hintere Umschlagseite 14 und sämtliche Innenseiten 15 im Innenraum 5 des Endgeräts 1 angeordnet sind und somit sämtliche im Ausweisbuch 4 vorhandene Transponder 16 dem Wechselfeld ausgesetzt sind. Es ist jedoch auch möglich, jeweils nur einige der Transponder 16 dem Wechselfeld auszusetzen. Dies wird anhand der Fig. 4 und 5 näher erläutert.

Fig. 4 zeigt das in den Fig. 1 dargestellte Ausführungsbeispiel des Endgeräts 1 mit dem Ausweisbuch 4 in einem ersten aufgeblätterten Zustand in einer schematischen Schnittdarstellung. Die in Fig. 2 dargestellten Komponenten im Inneren des Endgeräts 1 sind in Fig. 4 aus Gründen der Übersichtlichkeit weggelassen.

Bei dem in Fig. 4 dargestellten ersten aufgeblätterten Zustand sind die vordere Umschlagseite 13 sowie einige sich daran anschließende Innenseiten 15 im Aufnahmeraum 5 des Endgeräts 1 angeordnet. Die hintere Umschlagseite 14 und einige sich daran anschließende Innenseiten 15 des Ausweisbuchs 4 sind derart außerhalb des Aufnahmeraums 5 angeordnet, dass sie einen am Gehäuse 2 des Endgeräts 1 anliegenden Stapel bilden. Demgemäß ist zwischen dem innerhalb des Endgeräts 1 und dem außerhalb des Endgeräts 1 angeordneten Teil des Ausweisbuchs 4 ein rechter Winkel ausgebildet. Durch das Anordnen lediglich eines Teils der Seiten des Ausweisbuchs 4 im Aufnahmeraum 5 des Endgeräts 1 können die durch die Wechselwirkung der Transponder 16 entstehenden Probleme reduziert werden, da für die Energie- und Datenübertragung zwischen dem Endgerät 1 und den Transpondern 16 des Ausweisbuchs 4 lediglich die innerhalb des Aufnahmeraums 5 des Endgeräts 1 angeordneten Transponder 16 von Relevanz sind. Mit anderen Worten, der durch die gegenteilige Beeinflussung der Transponder 16 hervorgerufene Effekt fällt geringer aus als im geschlossenen Zustand des Ausweisbuchs 4, da die Anzahl der Transponder 16, die sich gegenseitig beeinflussen, geringer ist als die Gesamtzahl der Transponder 16 des Ausweisbuchs 4.

Fig. 5 zeigt das in den Fig. 1 dargestellte Ausführungsbeispiel des Endgeräts 1 mit dem Ausweisbuch 4 in einem zweiten aufgeblätterten Zustand in einer schematischen Schnittdarstellung. Analog zu Fig. 4 wurden die inneren Komponenten des Endgeräts 1 wiederum nicht figürlich dargestellt und können beispielsweise der Fig. 2 entsprechen.

Der in Fig. 5 dargestellte zweite aufgeblätterte Zustand des Ausweisbuchs 4 zeichnet sich dadurch aus, dass lediglich eine einzige Innenseite 15 des Ausweisbuchs 4 im Aufnahmeraum 5 des Endgeräts 1 angeordnet ist. Die restlichen Innenseiten 15 sowie die vordere Umschlagseite 13 und die hintere Umschlagseite 14 des Ausweisbuchs 4 sind außerhalb des Aufnahmeraums 5 angeordnet und liegen am Gehäuse 2 des Endgeräts 1 an. Somit ist zwischen der im Aufnahmeraum 5 angeordneten Innenseite 15 und den außerhalb des Aufnahmeraums 5 angeordneten Teilen des Ausweisbuchs 4 ein rechter Winkel ausgebildet. Die vordere Umschlagseite 13 und die hintere Umschlagseite 14 des Ausweisbuchs 4 schließen einen Winkel von ungefähr 180° miteinander ein. Auf die vorstehend beschriebene Weise ist es möglich, einen einzigen Transponder 16 des Ausweisbuchs 4 für die Kommunikation mit dem Endgerät 1 zu separieren und die Einflüsse der restlichen Transponder 16 des Ausweisbuchs 4 zu eliminieren, falls auf der im Aufnahmeraum 5 angeordneten Innenseite 15 des Ausweisbuchs 4 lediglich ein Transponder 16 angeordnet ist.

Auf die in Fig. 5 dargestellte Weise können auch mehr als eine Innenseite 15 im Aufnahmeraum 5 des Endgeräts 1 angeordnet werden und auf diese Weise eine Vorauswahl für die Kommunikation mit dem Endgerät 1 getroffen werden.

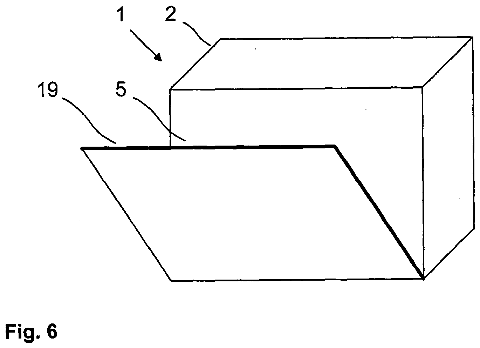

Fig. 6 zeigt ein weiteres Ausführungsbeispiel des Endgeräts 1 in einer vereinfachten Perspektivdarstellung. Dieses Ausführungsbeispiel zeichnet sich dadurch aus, dass es eine schwenkbare Seitenwand 19 aufweist. Der Aufnahmeraum 5 für das Ausweisbuch 4 wird durch den Zwischenraum zwischen der Seitenwand 19 und dem Gehäuse 2 des Endgeräts 1 gebildet und ist somit abhängig von der Schwenkposition der Seitenwand 19. Bezüglich seiner internen Komponenten ist das in Fig. 6 dargestellte Ausführungsbeispiel des Endgeräts 1 entsprechend dem Ausführungsbeispiel der Fig. 2 ausgebildet. Dabei kann die Seitenwand 19 mit dem Magnetfeldsensor 8 ausgestattet sein und/oder die Ferritschicht 11 sowie die Metallschicht 12 aufweisen. Ebenso ist es auch möglich, die Seitenwand 19 mit der Antenne 6 auszustatten.

Zur Durchführung einer Kommunikation mit dem Endgerät 1 wird die Seitenwand 19 vom Gehäuse 2 des Endgeräts 1 weggeschwenkt, das Ausweisbuch 4 im Bereich zwischen der Seitenwand 19 und dem Gehäuse 2 positioniert und die Seitenwand 19 wieder zum Gehäuse 2 hingeschwenkt. Dann kann die Kommunikation durchgeführt werden. Nach Beendigung der Kommunikation wird die Seitenwand 19 vom Gehäuse 2 weggeschwenkt und dann das Ausweisbuch 4 entnommen.

Die Seitenwand 19 kann auch auf andere Weise beweglich ausgebildet sein als in Fig. 6 dargestellt. Beispielsweise kann die Seitenwand 19 verschiebbar ausgebildet sein.

### Bezugszeichenliste

- 1: Endgerät
- 2: Gehäuse
- 3: Schlitz
- 4: Ausweisbuch
- 5: Aufnahmeraum
- 6: Antenne
- 7: Sendeeinrichtung
- 8: Empfangseinrichtung
- 9: Magnetfeldsensor
- 10: Messeinrichtung
- 11: Ferritschicht
- 12: Metallschicht
- 13: vordere Umschlagseite
- 14: hintere Umschlagseite
- 15: Innenseite
- 16: Transponder
- 17: Transponderantenne
- 18: integrierter Schaltkreis
- 19: Seitenwand

## Patentansprüche

1. Endgerät zur kontaktlosen Kommunikation mit einem Transponder (16) einer Transponderanordnung (4), die mehrere Transponder (16) aufweist, die auf oder in einer eine mechanische Einheit bildende Trägerstruktur (13, 14, 15) angeordnet sind, wobei das Endgerät (1) ein Gehäuse (2) und eine innerhalb des Gehäuses (2) angeordnete Antenne (6) aufweist, wobei innerhalb des Gehäuses (2) ein Aufnahmeraum (5) zur wenigstens teilweisen Aufnahme der Transponderanordnung (4) ausgebildet ist, **dadurch gekennzeichnet, dass** ein Teilbereich des Endgeräts (1), der den Aufnahmeraum (5) beinhaltet, gegen Magnetfelder abgeschirmt ist und eine Sensoreinrichtung (9) zur Ermittlung einer Kenngröße eines für die kontaktlose Kommunikation verwendeten Felds vorgesehen ist.

2. Endgerät nach Anspruch 1, **dadurch gekennzeichnet, dass** die Antenne (6) benachbart zum Aufnahmeraum (5) angeordnet ist.

3. Endgerät nach einem der vorhergehenden Ansprüche, **dadurch gekennzeichnet, dass** der Aufnahmeraum (5) so dimensioniert ist, dass er sämtliche Transponder (16) der Transponderanordnung (4) aufnehmen kann.

4. Endgerät nach einem der vorhergehenden Ansprüche, **dadurch gekennzeichnet, dass** der Aufnahmeraum (5) über eine schlitzförmige Öffnung (3) zugänglich ist.

5. Endgerät nach einem der Ansprüche 1 bis 3, **dadurch gekennzeichnet, dass** der Aufnahmeraum (5) über eine beweglich angeordnete Abdeckung (19) zugänglich ist.

6. Endgerät nach Anspruch 1, **dadurch gekennzeichnet, dass** die Sensoreinrichtung (9) benachbart zum Aufnahmeraum (5) angeordnet ist.

7. Endgerät nach einem der Ansprüche 1 bis 6, **dadurch gekennzeichnet, dass** die Sensoreinrichtung (9) auf einer zur Antenne (6) entgegengesetzten Seite des Aufnahmeraums (5) angeordnet ist.

8. Endgerät nach einem der Ansprüche 1 bis 7, **dadurch gekennzeichnet, dass** eine Messeinrichtung (10) vorgesehen ist zur Beeinflussung wenigstens eines Betriebsparameters des Endgeräts (1) abhängig von der ermittelten Kenngröße des Felds.

9. Endgerät nach Anspruch 8, **dadurch gekennzeichnet, dass** der Betriebsparameter das von der Antenne (6) erzeugte Feld oder die Empfindlichkeit einer Empfangseinrichtung (8) zur Verarbeitung von Signalen beeinflusst, die dem Endgerät (1) von einem der Transponder (16) der Transponderanordnung (4) übermittelt werden.

10. Endgerät nach einem der Ansprüche 1 bis 9, **dadurch gekennzeichnet, dass** sich die Kenngröße auf einen Betriebszustand des Endgeräts (1) bezieht, bei dem die Transponderanordnung (4) im Aufnahmeraum (5) positioniert ist.

11. Endgerät nach einem der Ansprüche 1 bis 10, **dadurch gekennzeichnet, dass** die Sensoreinrichtung (9) als Empfangsantenne für Signale betreibbar ist, die dem Endgerät (1) von einem der Transponder (16) der Transponderanordnung (4) übermittelt werden.

12. Endgerät nach einem der vorhergehenden Ansprüche, **dadurch gekennzeichnet, dass** es für eine Kommunikation mit einem Transponder (16) einer Transponderanordnung (4) in Form eines Buchs mit mehreren Seiten (13, 14, 15) ausgelegt ist, wobei wenigstens eine der Seiten (13, 14, 15) wenigstens einen Transponder (16) aufweist.

13. Endgerät nach einem der vorhergehenden Ansprüche, **dadurch gekennzeichnet, dass** es für eine Kommunikation mit einem Transponder (16) einer Transponderanordnung (4) ausgelegt ist, deren Transponder (16) so nahe zueinander benachbart angeordnet sind, dass sie sich bezüglich ihrer Kommunikationseigenschaften gegenseitig beeinflussen.

14. Verfahren zur Durchführung einer kontaktlosen Kommunikation zwischen einem Endgerät (1) und einem Transponder (16) einer Transponderanordnung (4), die mehrere Transponder (16) aufweist, die auf oder in einer eine mechanische Einheit bildende Trägerstruktur (13, 14, 15) angeordnet sind, wobei die Transponderanordnung (4) wenigstens teilweise in einem Aufnahmeraum (5) innerhalb eines Gehäuses (2) des Endgeräts (1) angeordnet wird, **dadurch gekennzeichnet, dass** ein Teilbereich des Endgeräts (1), der den Aufnahmeraum (5) beinhaltet, gegen Magnetfelder abgeschirmt wird und nach dem Positionieren der Transponderanordnung (4) in dem Aufnahmeraum (5) des Endgeräts (1) eine Kenngröße eines für die kontaktlose Kommunikation verwendeten Felds durch eine Sensoreinrichtung (9) des Endgeräts (1) ermittelt wird.

15. Verfahren nach Anspruch 14, **dadurch gekennzeichnet, dass** wenigstens ein Transponder (16) der Transponderanordnung (4) im Aufnahmeraum (5) des Endgeräts (1) positioniert wird und wenigstens ein Transponder (16) der Transponderanordnung (4) außerhalb des Aufnahmeraums (5) verbleibt.

16. Verfahren nach einem der Ansprüche 14 oder 15, **dadurch gekennzeichnet, dass** die Transponderanordnung (4) in Form eines Buchs mit mehreren Seiten (13, 14, 15) ausgebildet ist und wenigstens eine der Seiten (13, 14, 15) wenigstens teilweise im Aufnahmeraum (5) des Endgeräts (1) positioniert wird und wenigstens eine der Seiten (13, 14, 15) außerhalb des Aufnahmeraums (5) verbleibt.

## Claims

1. A terminal for contactless communication with a transponder (16) of a transponder arrangement (4) having several transponders (16) which are arranged on or in a carrier structure (13, 14, 15) forming a mechanical unit, wherein the terminal (1) has a housing (2) and an antenna (6) arranged within the housing (2), wherein within the housing (2) a receiving space (5) is formed for at least partially receiving the transponder arrangement (4), **characterized in that** a portion of the terminal (1) that contains the receiving space (5) is shielded against magnetic fields and a sensor device (9) is provided for ascertaining a characteristic of a field employed for the contactless communication.

2. The terminal according to claim 1, **characterized in that** the antenna (6) is arranged adjacent to the receiving space (5).

3. The terminal according to either of the preceding claims, **characterized in that** the receiving space (5) is dimensioned such that it can receive all transponders (16) of the transponder arrangement (4).

4. The terminal according to any of the preceding claims, **characterized in that** the receiving space (5) is accessible via a slot-shaped opening (3).

5. The terminal according to any of claims 1 to 3, **characterized in that** the receiving space (5) is accessible via a movably arranged cover (19).

6. The terminal according to claim 1, **characterized in that** the sensor arrangement (9) is arranged adjacent to the receiving space (5).

7. The terminal according to any of claims 1 to 6, **characterized in that** the sensor arrangement (9) is arranged on a side of the receiving space (5) which is opposite the antenna (6).

8. The terminal according to any of claims 1 to 7, **characterized in that** a measuring device (10) is provided for influencing at least one operating parameter of the terminal (1) in dependence on the ascertained characteristic of the field.

9. The terminal according to claim 8, **characterized in that** the operating parameter influences the field produced by the antenna (6) or the sensitivity of a receiving device (8) for processing signals transferred to the terminal (1) by one of the transponders (16) of the transponder arrangement (4).

10. The terminal according to any of claims 1 to 9, **characterized in that** the characteristic refers to an operating state of the terminal (1) in which the transponder arrangement (4) is positioned in the receiving space (5).

11. The terminal according to any of claims 1 to 10, **characterized in that** the sensor device (9) is operable as a receiving antenna for signals transferred to the terminal (1) by one of the transponders (16) of the transponder arrangement (4).

12. The terminal according to any of the preceding claims, **characterized in that** said terminal is adapted for a communication with a transponder (16) of a transponder arrangement (4) in the form of a book with several pages (13, 14, 15), wherein at least one of the pages (13, 14, 15) has at least one transponder (16).

13. The terminal according to any of the preceding claims, **characterized in that** said terminal is adapted for a communication with a transponder (16) of a transponder arrangement (4) the transponders of which are arranged so closely adjacent to each other that they influence one another with respect to their communication properties.

14. A method for carrying out a contactless communication between a terminal (1) and a transponder (16) of a transponder arrangement (4) having several transponders (16) which are arranged on or in a carrier structure (13, 14, 15) forming a mechanical unit, wherein the transponder arrangement (4) is arranged at least partially in a receiving space (5) within a housing (2) of the terminal (1), **characterized in that** a portion of the terminal (1) that contains the receiving space (5) is shielded against magnetic fields and after the positioning of the transponder arrangement (4) in the receiving space (5) of the terminal (1) a characteristic of a field employed for the contactless communication is ascertained by a sensor device (9) of the terminal (1).

15. The method according to claim 14, **characterized in that** at least one transponder (16) of the transponder arrangement (4) is positioned in the receiving space (5) of the terminal (1) and at least one transponder (16) of the transponder arrangement (4) remains outside the receiving space (5).

16. The method according to either of claims 14 or 15, **characterized in that** the transponder arrangement (4) is formed in the form of a book with several pages (13, 14, 15) and at least one of the pages (13, 14, 15) is positioned at least partially in the receiving space (5) of the terminal (1) and at least one of the pages (13, 14, 15) remains outside the receiving space (5).

## Revendications

1. Terminal destiné à la communication sans contact avec un transpondeur (16) d'un agencement de transpondeurs (4) comportant plusieurs transpondeurs (16) agencés sur ou dans une structure porteuse (13, 14, 15) constituant une unité mécanique, cependant que le terminal (1) comporte un boîtier (2) et une antenne (6) agencée à l'intérieur du boîtier (2), cependant que, à l'intérieur du boîtier (2), un espace de logement (5) pour le logement au moins partiel de l'agencement de transpondeurs (4) est réalisé, **caractérisé en ce qu'**une zone partielle, comportant l'espace de logement (5), du terminal (1), est blindée contre des champs magnétiques et qu'un dispositif capteur (9) pour la détermination d'une valeur caractéristique d'un champ utilisé pour la communication sans contact est prévu.

2. Terminal selon la revendication 1, **caractérisé en ce que** l'antenne (6) est agencée de manière adjacente à l'espace de logement (5).

3. Terminal selon une des revendications précédentes, **caractérisé en ce que** l'espace de logement (5) est dimensionné de telle façon qu'il peut recevoir tous les transpondeurs (16) de l'agencement de transpondeurs (4).

4. Terminal selon une des revendications précédentes, **caractérisé en ce que** l'espace de logement (5) est accessible par une ouverture (3) en forme de fente.

5. Terminal selon une des revendications de 1 à 3, **caractérisé en ce que** l'espace de logement (5) est accessible par une couverture (19) agencée de façon mobile.

6. Terminal selon la revendication 1, **caractérisé en ce que** le dispositif capteur (9) est agencé de manière adjacente à l'espace de logement (5).

7. Terminal selon une des revendications de 1 à 6, **caractérisé en ce que** le dispositif capteur (9) est agencé sur un côté de l'espace de logement (5) opposé à l'antenne (6).

8. Terminal selon une des revendications de 1 à 7, **caractérisé en ce qu'**un dispositif de mesure (10) est prévu pour influencer au moins un paramètre de fonctionnement du terminal (1) en fonction de la valeur caractéristique déterminée du champ.

9. Terminal selon la revendication 8, **caractérisé en ce que** le paramètre de fonctionnement influence le champ généré par l'antenne (6) ou la sensibilité d'un dispositif de réception (8) pour le traitement de signaux qui sont transmis au terminal (1) par un des transpondeurs (16) de l'agencement de transpondeurs (4).

10. Terminal selon une des revendications de 1 à 9, **caractérisé en ce que** la valeur caractéristique se rapporte à un état de fonctionnement du terminal (1) dans lequel l'agencement de transpondeurs (4) est positionné dans l'espace de logement (5).

11. Terminal selon une des revendications de 1 à 10, **caractérisé en ce que** le dispositif capteur (9) peut fonctionner en tant qu'antenne de réception pour des signaux transmis au terminal (1) par un des transpondeurs (16) de l'agencement de transpondeurs (4).

12. Terminal selon une des revendications précédentes, **caractérisé en ce qu'**il est conçu pour une communication avec un transpondeur (16) d'un agencement de transpondeurs (4) sous forme d'un livre à plusieurs pages (13, 14, 15), cependant qu'au moins une des pages (13, 14, 15) comporte au moins un transpondeur (16).

13. Terminal selon une des revendications précédentes, **caractérisé en ce qu'**il est conçu pour une communication avec un transpondeur (16) d'un agencement de transpondeurs (4) dont les transpondeurs (16) sont agencés de manière si intimement adjacente entre eux qu'ils s'influencent mutuellement quant à leurs propriétés de communication.

14. Procédé d'exécution d'un communication sans contact entre un terminal (1) et un transpondeur (16) d'un agencement de transpondeurs (4) comportant plusieurs transpondeurs (16) agencés sur ou dans une structure porteuse (13, 14, 15) constituant une unité mécanique, cependant que l'agencement de transpondeurs (4) est agencé au moins partiellement dans un espace de logement (5) à l'intérieur d'un boîtier (2) du terminal (1), **caractérisé en ce qu'**une zone partielle, comportant l'espace de logement (5), du terminal (1), est blindée contre des champs magnétiques et que, après le positionnement de l'agencement de transpondeurs (4) dans l'espace de logement (5) du terminal (1), une valeur caractéristique d'un champ utilisé pour la communication sans contact est déterminée par un dispositif capteur (9) du terminal (1).

15. Procédé selon la revendication 14, **caractérisé en ce qu'**au moins un transpondeur (16) de l'agencement de transpondeurs (4) est positionné dans l'espace de logement (5) du terminal (1) et qu'au moins un transpondeur (16) de l'agencement de transpondeurs (4) demeure à l'extérieur de l'espace de logement (5).

16. Procédé selon une des revendications 14 ou 15, **caractérisé en ce que** l'agencement de transpondeurs (4) est réalisé sous forme d'un livre à plusieurs pages (13, 14, 15) et qu'au moins une des pages (13, 14, 15) est positionnée au moins partiellement dans l'espace de logement (5) du terminal (1) et qu'au moins une des pages (13, 14, 15) demeure à l'extérieur de l'espace de logement (5).
